# EUROPEAN PATENT APPLICATION

(11) **EP 4 825 174 A1**
(43) Date of publication of application: **21.10.2026**
(21) Application number: 25171037.2
(22) Date of filing: 16.04.2025
(51) Int. Cl.: A01N 37/46, A01P 21/00, C05F 11/10

(54) **USE OF AEDG PEPTIDE, OR A SALT THEREOF, AS A BIOSTIMULANT FOR TREATING A PLANT OF THE ORDER OF LAMIALES**

(71) Applicant: Capsa Ellen GmbH, 7000 Chur (CH)
(72) Inventor: DUDKOV, Alexander, 1204 Geneva (CH); HUBER, Daniel, 1248 Hermance (CH)
(74) Representative: Santarelli

(57) **Abstract**

The invention concerns the use of an ultrashort AEDG peptide, or a salt thereof, as a biostimulant for treating a plant from the order *Lamiales,* and a process for stimulating and more particularly stimulating roots and/or the yield from a plant and/or improving its nutrient content.

## Description

### Field of Invention

The present invention relates to the use of an ultrashort peptide as a biostimulant for the cultivation of a plant, such as a plant from the order *Lamiales.*

### Background to the invention

This invention pertains to the use of ultrashort peptides to stimulate plant growth. With the increasing global population and mounting environmental challenges such as climate change (temperature fluctuations, drought, floods, etc.), soil degradation (presence of toxic heavy metals, deficiency of essential nutrients, etc.) and the reduction in permitted chemical inputs, it has become imperative to develop innovative solutions that improve agricultural yields while preserving ecosystems. In particular, it is necessary to be able to improve yields of plants belonging to the order *Lamiales,* which include major food crops that are an essential source of protein and nutrients for billions of people. By "food crops", it is intended a type of agricultural crop that is specifically cultivated for human consumption (e.g. legumes, such as beans, peas, lentils, soybean, etc.).

Ultrashort peptides, as natural or synthetic molecules, are protein fragments that perform specific biological functions. Their action can appear not only as signalling objects but also as participating in biological processes in plant cultivation.

Ultrashort peptides have numerous advantages compared to their larger counterparts. In particular, it's worth highlighting their economical synthesis both on small and large scales, wide chemical diversity, ease of modification, high biological activity, absorbability, availability, customizable functionalization, high selectivity and specificity, biodegradability and biocompatibility, high safety, low toxicity or low immunogenicity.

The invention described herein introduces the use of an AEDG ultrashort peptide, or a salt thereof, as a biostimulant for treating a plant from the order *Lamiales,* and a process for stimulating and more particularly stimulating roots and/or the yield from a plant and/or improving its nutrient content. In particular, the invention determines the influence of AEDG ultrashort peptide on seed sowing qualities and growth indicators at the initial stages of ontogenesis in the cultivation of plants from the order *Lamiales.*

The present invention thus relates to the use of a peptide consisting of the amino acid sequence of AEDG (SEQ ID NO: 1), or a salt thereof, as a biostimulant for treating a plant of the order Lamiales.

The AEDG peptide is an ultrashort peptide.

By "ultrashort peptide", it is intended to mean a peptide that consists in only two to seven amino acids.

It will be noted that in the context of the present application, and unless otherwise stipulated, the ranges of values indicated are understood to be inclusive.

More particularly, the ultrashort peptide is a tetrapeptide.

In the present specification, amino acid sequences are written from N-terminus to C-terminus unless otherwise stated. The structural formula of the tetrapeptide is H-Ala-Glu-Asp-Gly-OH.

Advantageously, the AEDG peptide comprises L-amino acids, preferably consists in L-amino acids. Thus, the peptide is preferably a tetrapeptide L-Ala-L-Glu-L-Asp-L-Gly.

Preferably, the AEDG peptide is an isolated peptide. Advantageously, the AEDG peptide is a synthetic peptide and also referred to as Epitalon.

Still more preferably, the peptide according to the invention is a tetrapeptide having an amino acid sequence of AEDG (SEQ ID NO: 1), wherein the amino acids are L-amino acids, and wherein the amino acid sequence is written from N-terminus to C-terminus.

Advantageously, the peptide can be used as free peptide or in the form of a salt, such as a sodium, potassium, ammonium or zinc salt.

Preferably, AEDG peptide, or a salt thereof, is used at an "effective dose", i.e. at a quantity of AEDG peptide, or a salt thereof sufficient to trigger the biostimulant effect of the peptide.

The AEDG peptide, or a salt thereof, is used according to the present invention for treating a plant of the order Lamiales.

By "plant", it is intended to mean any part of a plant at any stage of its development. In a non-limitative way, the word "plant" includes any of the following elements: seeds, roots, stems, leaves, flowers, fruits, nodes and internodes, buds, etc ; or at any stages of development of a plant: sprout, seedling, juvenile plant and mature plant.

*Lamiales* are an order of dicotyledonous flowering plants. This order includes the families from the group consisting of *Acanthaceae, Bignoniaceae, Byblidaceae, Calceolariaceae, Carlemanniaceae, Gesneriaceae, Lamiaceae, Linderniaceae, Lentibulariaceae, Martyniaceae, Mazaceae, Oleaceae, Orobanchaceae, Paulowniaceae, Pedaliaceae, Phrymaceae, Plantaginaceae, Plocospermataceae, Schlegeliaceae, Scrophulariaceae, Stilbaceae, Tetrachondraceae, Thomandersiaceae and Verbenaceae.*

Preferably, the plant is selected from the family *Lamiaceae.*

The plant of family *Lamiaceae* is selected from the genus consisting of *Aegiphila, Agastache, Ajuga, Amasonia, Bystropogon, Callicarpa, Clerodendrum, Clinopodium, Coleus, Congea, Conradina, Dicerandra, Dracocephalum, Elsholtzia, Faradaya, Gmelina, Hanceola, Haplostachys, Holmskioldia, Hyptis, Isodon, Kalaharia, Lamium, Lavandula, Leonotis, Leonurus, Lepechinia, Leucas, Marrubium, Mentha, Moluccella, Monarda, Nepeta, Ocimum, Origanum, Orthosiphon, Ovieda, Oxera, Perilla, Phlomis, Phyllostegia, Plectranthus, Pogostemon, Premna, Prostanthera, Prunella, Pycnanthemum, Rosmarinus, Rotheca, Rydingia, Salvia, Satureja, Scutellaria, Sideritis, Siphocranion, Stachys, Stenogyne, Symphorema, Tectona, Tetraclea, Teucrium, Thymus, Vitex, Volkameria* or *Westringia.*

Preferably, the plant of the order *Lamiales* is selected from the genus *Ocimum, Dracocephalum* or *Satureja.*

The plant of genus *Ocimum* can be selected from the species *Ocimum americanum, Ocimum basilicum, Ocimum gratissimum, Ocimum tenuiflorum* or *Ocimum kilimandscharicum,* preferably, of the specie *Ocimum tenuiflorum.* The specie *Ocimum tenuiflorum* is commonly known as Holy basil.

The plant of genus *Dracocephalum* can be selected from the species *Dracocephalum aitchisonii, Dracocephalum argunense, Dracocephalum aucheri, Dracocephalum austriacum, Dracocephalum bipinnatum, Dracocephalum botryoides, Dracocephalum breviflorum, Dracocephalum bullatum, Dracocephalum butkovii, Dracocephalum calophyllum, Dracocephalum charkeviczii, Dracocephalum discolor, Dracocephalum diversifolium, Dracocephalum ferganicum, Dracocephalum foetidum, Dracocephalum formosum, Dracocephalum forrestii, Dracocephalum fragile, Dracocephalum fruticulosum, Dracocephalum grandiflorum, Dracocephalum heterophyllum, Dracocephalum hoboksarensis, Dracocephalum imberbe, Dracocephalum imbricatum, Dracocephalum integrifolium, Dracocephalum isabellae, Dracocephalum jacutense, Dracocephalum junatovii, Dracocephalum kafiristanicum, Dracocephalum komarovii, Dracocephalum kotschyi, Dracocephalum krylovii, Dracocephalum lindbergii, Dracocephalum longipedicellatum, Dracocephalum microflorum, Dracocephalum moldavica, Dracocephalum multicaule, Dracocephalum multicolor, Dracocephalum nodulosum, Dracocephalum nuratavicum, Dracocephalum nuristanicum, Dracocephalum nutans, Dracocephalum oblongifolium, Dracocephalum olchonense, Dracocephalum origanoides, Dracocephalum palmatoides, Dracocephalum palmatum, Dracocephalum parviflorum, Dracocephalum paulsenii, Dracocephalum peregrinum, racocephalum pinnatum, Dracocephalum polychaetum, Dracocephalum popovii, Dracocephalum propinquum, Dracocephalum psammophilum, Dracocephalum purdomii, Dracocephalum renati, Dracocephalum rigidulum, Dracocephalum rupestre, Dracocephalum ruyschiana, Dracocephalum schischkinii, Dracocephalum scrobiculatum, Dracocephalum spinulosum, Dracocephalum stamineum, Dracocephalum stellerianum, Dracocephalum subcapitatum, Dracocephalum surmandinum, Dracocephalum taliense, Dracocephalum tanguticum, Dracocephalum thymiflorum, Dracocephalum truncatum, Dracocephalum velutinum, Dracocephalum wallichii* or *Dracocephalum wendelboi,* preferably, of the specie *Dracocephalum moldavica.* The specie *Dracocephalum moldavica* is commonly known as Moldavian dragonhead.

The plant of genus *Satureja* can be selected from the species *Satureja adamovicii, Satureja aintabensis, Satureja Amani, Satureja atropatana, Satureja avromanica, Satureja bachtiarica, Satureja boissieri, Satureja bzybica, Satureja caroli-paui, Satureja cilicica, Satureja coerulea, Satureja cuneifolia, Satureja delpozoi, Satureja edmondii, Satureja exspectata, Satureja fukarekii, Satureja hellenica, Satureja hortensis, Satureja horvatii, Satureja icarica, Satureja innota, Satureja intermedia, Satureja intricata, Satureja isophylla, Satureja kallarica, Satureja kermanshahensis, Satureja khuzistanica, Satureja kitaibelii, Satureja laxiflora, Satureja linearifolia, Satureja macrantha, Satureja metastasiantha, Satureja montana, Satureja mutica, Satureja nabateorum, Satureja orjenii, Satureja pallaryi, Satureja parnassica, Satureja pilosa, Satureja rumelica, Satureja sahendica, Satureja salzmannii, Satureja spicigera, Satureja spinose, Satureja subspicata, Satureja taurica, Satureja thymbra, Satureja thymbrifolia, Satureja visianii* or *Satureja wiedemanniana,* preferably, of the specie *Satureja hortensis.* The specie *Satureja hortensis* is commonly known as Summer savory.

Preferably, the plant is of the species chosen from the group consisting of *Ocimum tenuiflorum, Dracocephalum moldavica* or *Satureja hortensis.*

More specifically, the AEDG peptide, or a salt thereof, is used to treat any part of a plant from the order *Lamiales* at any stage of its development. In a non-limitative way, the AEDG peptide, or a salt thereof, is used to treat any of the following parts of a plant: seeds, roots, stems, leaves, flowers, fruits, nodes and internodes, buds, etc.

As mentioned above, the AEDG peptide, or a salt thereof, is used according to the present invention as a biostimulant.

By "Biostimulant", it is intended to mean any product or composition that improves one or more of the following natural processes in a plant or their rhizosphere: growth and/or immune responses and/or productivity and/or resilience to stress (*i.e.* drought, salinity or extreme temperatures), in comparison to natural processes that would occur in the absence of a biostimulant. A biostimulant is to be distinguished from biofertilizers, which supply nutrients to the plant and/or improve soil organic matter.

Advantageously, the AEDG peptide, or a salt thereof, according to the present invention stimulates the growth of a plant of the order *Lamiales,* preferably, of the family *Lamiaceae,* more preferably, of the genus *Ocimum, Dracocephalum* or *Satureja.*

By "growth", it is intended to mean the process by which a plant increases in size, mass, and complexity over time. More specifically, the growth of a plant encompasses one or more of the following stages: germination (*i.e.* activation of the seed and emergence of a seedling) and/or vegetative growth (*i.e.* development of leaves, flower, stems and roots) and/or reproductive growth (*i.e.* formation of flowers, fruit and seeds) and/or maturation and senescence (*i.e.* completion of the growth cycle and eventual aging).

By "productivity", it is intended to mean the capacity of a plant to produce biomass or yields (grain, fruit, fiber, seed, etc.) or nutrients content (minerals, micro-nutrients, vitamins, antioxidant such as the polyphenols, etc) over a given period.

The AEDG peptide, or a salt thereof, is used as a biostimulant such as a growth activator of a plant.

Advantageously, in the use according to the invention, the biostimulant is a yield stimulant and/or a root stimulant.

By "yield stimulant", it is intended to mean a biostimulant that increases the yield of the plant (*i.e.* grain, fruit, fiber, seed, etc.), in comparison to a natural processes that would occur in the absence of a yield stimulant. In agriculture, the yield is the quantity of the product harvested per unit area.

The AEDG peptide, or a salt thereof, is used to increase the yield at any stage of growth.

Advantageously, the AEDG peptide, or a salt thereof, increases the yield of a plant of the order *Lamiales* by 2 %, more advantageously by 3 %, even more advantageously by 5 %, compared with a plant not treated with the AEDG peptide, or a salt thereof.

Preferably, the AEDG peptide, or a salt thereof, increases the yield of a plant of the family *Lamiaceae,* more preferably of the genus *Ocimum, Dracocephalum* or *Satureja,* such as *Dracocephalum moldavica* or *Satureja hortensis.*

Preferably, the AEDG peptide, or a salt thereof, increases the yield of a plant of the genus *Dracocephalum* by 2 %, more preferably by 2.5 %, still more preferably by 3 % compared with a plant not treated with the AEDG peptide, or a salt thereof.

Preferably, the AEDG peptide, or a salt thereof, increases the yield of a plant of the genus *Satureja* by 5 %, more preferably by 7 %, still more preferably by 8% compared with a plant not treated with the AEDG peptide, or a salt thereof.

By "root stimulant", it is intended to mean a biostimulant that improves the growth of the roots in a plant (*i.e.* the root development in length, weight, thickness and complexity), in comparison to natural processes that would occur in the absence of a root stimulant.

By "root", it is intended to mean the part of a plant conveying water and nourishment to the rest of the plant. The roots can be organized into two distinct systems, *i.e.* either a taproot system or a fibrous root system. Both root systems are composed of primary and secondary (or lateral) roots. Roots can also arise from non-root tissues, such as the base of the stem or nodes, instead of growing from the embryonic radicle. Said roots are called "adventitious roots".

By "primary roots", it is intended to mean the early roots that are formed from the embryonic radicle after germination.

By "embryonic radicle", it is intended to mean the first root that emerges from the seed during germination. This embryonic radicle is also referred to as main root in the examples.

By "secondary (or lateral) roots", it is intended to mean the roots that develop from the pericycle of the primary root and grow laterally (horizontally or obliquely) outward.

In a taproot system, the primary root is a taproot.

By "taproot", it is intended to mean the main, central root of a plant's root system that grows vertically downward and becomes the dominant root in plants with a taproot system. The taproot often grows deep into the soil.

In a taproot system, secondary roots are lateral roots that branch out from the taproot, and typically grow horizontally or diagonally. The taproot system is common in dicotyledonous plants, such as carrots, radishes, beets, dandelions, turnips, etc.

In a fibrous root system, a network of thin, branching roots spread out in all directions. It typically lacks a central, dominant root (like a taproot) and instead consists of many roots that are similar in size. The primary root, which initially develops from the embryonic radicle, is short-lived and stops growing early. It is replaced by a cluster of secondary roots of approximately equal size that arise from the base of the stem. These secondary roots form the characteristic fibrous root system.

The AEDG peptide, or a salt thereof, is used to improve the growth of a root at any stage of growth. More particularly, by "improve a growth of a root in plant", it intended to mean to increase at least the length of a root, such as the length of the embryonic radicle.

Advantageously, the AEDG peptide, or a salt thereof, increases the length of the embryonic radicle of a plant of the order *Lamiales* by 8 %, more advantageously, by 12%, even more advantageously, by 15 % compared with a plant not treated with the AEDG peptide, or a salt thereof.

Preferably, the AEDG peptide, or a salt thereof is used to improve the growth of a root of a plant of the family *Lamiaceae,* more preferably of the genus *Ocimum, Dracocephalum* or *Satureja,* such as *Ocimum tenuiflorum.*

Preferably, the AEDG peptide, or a salt thereof, increases the length of the embryonic radicle of a plant of the genus by *Ocimum* by 10 %, more preferably by 15 %, even more preferably by 18 % compared with a plant not treated with the AEDG peptide, or a salt thereof.

Advantageously, in the use according to the invention, the biostimulant is used to improve the nutrient content and/or the shoot system of the plant.

By "to improve the nutrient content", it is intended to mean at least increasing a nutrient content in a plant, in comparison with the corresponding nutrient content in a plant cultivated without a biostimulant.

The improvement of the nutrient content contributes to the plant's health, growth, productivity, and nutritional value for consumption.

Preferably, the nutrient content is the antioxidant content, more specifically, the polyphenol content.

The AEDG peptide, or a salt thereof, is used to improve the nutrient content at any stage of growth, such as the polyphenol content.

Advantageously, the AEDG peptide, or a salt thereof, increases the nutrient content of a plant of the order *Lamiales* by 2 %, more advantageously by 3 %, even more advantageously by 7 % compared with a plant not treated with the AEDG peptide, or a salt thereof.

More specifically, the AEDG peptide, or a salt thereof, is used to improve the nutrient content, and more specifically the polyphenol content, of a plant of the family *Lamiaceae,* more preferably, of the genus *Ocimum, Dracocephalum* or *Satureja,* such as *Dracocephalum moldavica* or *Satureja hortensis.*

Preferably, the AEDG peptide, or a salt thereof, increases the nutrient content of a plant of the genus *Dracocephalum* by 2 % and more preferably by 3 % compared with a plant not treated with the AEDG peptide, or a salt thereof.

Preferably, the AEDG peptide, or a salt thereof, increases the nutrient content of a plant of the genus *Satureja* by 3 %, more preferably by 5 %, even more preferably, by 7 % compared with a plant not treated with the AEDG peptide, or a salt thereof.

By "improve shoot system", it is intended to mean to increase the shoot system growth of the plant, *i.e.* increases the length of the main stem, the number of nodes and/or the number of buds and flowers, in comparison with a plant cultivated without a biostimulant.

By "shoot system", it is intended to mean the part of a plant that are not roots. The shoot system is responsible for several key functions, including photosynthesis, reproduction, and support. It includes the following components: the main stem, leaf, flower, fruit, bud. Together, these parts enable the plant to grow, reproduce, and adapt to its environment.

By "main stem", it is intended to mean the main structural axe of the shoot system. This main stem is also referred to as main shoot in the examples. The main stem transports the water, nutrient and other molecule between the root part and the shoot system. It also supports flowers, leaves and fruits and produces new living tissue. The main stem is also involved in photosynthesis and store nutrients. Moreover, the main stem is divided into nodes and internodes.

By "node", it is intended to mean the point of attachment on the main stem where the buds, the leaves, the flowers, and the branching twigs originate.

By "bud", it is intended to mean an outgrowth that appears on the stem or branch of the plants, and which contains the stems, branches, leaves, flowers or fruit in germ.

By "flowering bud", it is intended to mean a bud that produces only flower.

The AEDG peptide, or a salt thereof, is used to improve the shoot system at any stage of growth.

Advantageously, the AEDG peptide, or a salt thereof, increases the length of the main stem of a plant of the order *Lamiales* by 100 %, more advantageously by 110 %, even more advantageously by 130 % compared with a plant not treated with the AEDG peptide, or a salt thereof.

Preferably, the AEDG peptide, or a salt thereof, is used to improve the shoot system of a plant of the family *Lamiaceae,* more preferably, of the genus *Ocimum, Dracocephalum* or *Satureja,* such as *Ocimum tenuiflorum.*

Preferably, the AEDG peptide, or a salt thereof, increases the length of the main stem of a plant of the genus *Ocimum* by 120 %, more preferably by 140 %, even more preferably by 150 % compared with a plant not treated with the AEDG peptide, or a salt thereof.

Advantageously, the AEDG peptide, or a salt thereof, increases the number of nodes of a plant of the order *Lamiales* by 5 %, more advantageously by 10 %, even more advantageously by 20 % compared with a plant not treated with the AEDG peptide, or a salt thereof.

Preferably, the AEDG peptide, or a salt thereof, increases the number of nodes of a plant of the genus *Ocimum* by 10 %, more preferably by 20 %, even more preferably by 30 % compared with a plant not treated with the AEDG peptide, or a salt thereof.

As mentioned above, the AEDG peptide, or a salt thereof, is used to improve the buds/flowers ratio. More specifically, the AEDG peptide, or a salt thereof, increases the number of flowering buds, i.e. decreases the ratio between the number of buds and the number of flowers which bloom from these buds.

Advantageously, the AEDG peptide, or a salt thereof, increases the number of flowering buds of a plant of the order *Lamiales* by 15 %, more advantageously by 25 %, even more advantageously by 50 % compared with a plant not treated with the AEDG peptide, or a salt thereof.

Preferably, the AEDG peptide, or a salt thereof, increases the number of flowering buds of a plant of the genus *Ocimum* by 20 %, more preferably by 50 %, even more preferably by 80 % compared with a plant not treated with the AEDG peptide, or a salt thereof.

Advantageously, in the use according to the invention, the peptide is in solid form.

Preferably, the AEDG peptide, or a salt thereof, is in the form of a dry powder, such as a wettable powder, granules, microgranules, tablets or briquettes, more preferably, in the form of a wettable powder. The AEDG peptide, or a salt thereof, can be formulated into a solid composition.

In the use according to the invention, the peptide can be formulated as a liquid composition.

By "liquid composition", it is intended to mean that the composition is in liquid form at ambient temperature under normal conditions of atmospheric pressure. Advantageously, the liquid composition can be an aqueous solution, an oil, an emulsion or aerosol. Preferably, the liquid composition is an aqueous solution.

Preferably, the AEDG peptide, or a salt thereof, is formulated by dissolving the AEDG peptide in the form of a powder into water (such as sterile water, mineral water, ultra-pure water, demineralised water or tap water) while stirring.

Advantageously, the AEDG peptide, or a salt thereof, is formulated as an aqueous solution at a concentration comprised between 10⁻¹⁵ to 10⁻¹ g/L.

Preferably, the AEDG peptide, or a salt thereof, is formulated as an aqueous solution at a concentration comprised between 10⁻¹² to 10⁻² g/L, more preferably, between 10⁻¹⁰ to 10⁻² g/L, even more preferably, between 10⁻⁸ to 10⁻³ g/L.

Preferably, the AEDG peptide, or a salt thereof, formulated as an aqueous solution is used to treat a plant by spraying, such as spraying the leaves ; by soaking, such as soaking the seed ; or by applying said solution directly on the soil.

The invention also concerns a method for stimulating a plant by bringing into contact said plant with a peptide consisting of AEDG (SEQ ID NO:1), or a salt thereof.

In said method, the stimulation (administration, etc.), the plant and the peptide are as described above, including preferential features and embodiments.

As mentioned above, the AEDG peptide, or a salt thereof, can be formulated into a solid or liquid composition.

Preferably, the composition further comprises an adjuvant, additive and/or active ingredient, such as:
- Fertilizers (e.g. micronutrients, phosphates, phosphoric acid, nitrates salts, potassium salts, ammonium salts, urea etc.);
- Adjuvants and fillers useful in agronomy (e.g. non-ionic surfactants, stickers and spreaders, wetting agents, adhesives, penetrants, dispersants, acidifiers, and crop oils);
- Other additives (e.g. diatomaceous earth, etc.);
- Chelating agents (e.g. EDTA, citric acid, etc.);
- Solvents and solubilizers (e.g. water, ethanol or isopropanol, propylene glycol, etc.).

In said compositions, AEDG peptide, or a salt thereof, is as described above, including preferential features and embodiments.

Advantageously, in the use according to the invention, the biostimulant is used for treating seed.

By "seed", it is intended to mean the unit of reproduction of a plant, capable of developing into another such plant.

By "treating seed", it is intended to mean any of the following methods of treating the seed: seed dressing, seed coating, seed pelleting, seed dusting, seed soaking, spreading, spraying, watering, fertilizing irrigation, or any other seed applications.

The treating of the seed aims to optimise the health, the growth and the productivity of the plant resulting from the seed by improving its development conditions and nutritional values.

Preferably, the seed is immerged (*i.e.* soaked) in a liquid, such as liquid composition comprising the peptide, before being sown.

Advantageously, when the seed is treated, the AEDG peptide, or a salt thereof, improves the growth of the roots of a plant resulting from the seed, a plant of the order *Lamiales.* Preferably, the AEDG peptide, or a salt thereof, increases the length of the roots, in particularly the embryonic radicle, of the plant resulting from the seed, a plant of the order *Lamiales,* preferably of the family *Lamiaceae,* more preferably of the genus *Ocimum,* even more preferably of the genus *Ocimum tenuiflorum.*

The invention also concerns a process for stimulating a plant of the order Lamiales, comprising the following steps:
a) Treating said plant with AEDG peptide, or a salt thereof,
b) Cultivating said plant.

In the processes according to the invention, a "plant", the "order *Lamiales",* and the AEDG peptide and its uses are as described above, including the preferred and advantageous features and embodiments.

By "treating", it is intended to mean any of the following methods of treating a plant: spreading, spraying (soil or foliar spraying), fertilizing irrigation, seed coating or soaking, soil application, soil injection, controlled diffusion (granules or capsules) or aerial application. More particularly, step a) is a treating step that can be performed before and/or during step b).

More particularly, an effective dose of AEDG peptide is used for treating the plant.

By "stimulating a plant", it is intended to mean improving one or more of the following natural processes in said plant or its rhizosphere: growth and/or immune responses and/or productivity and/or resilience to stress (*i.e.* drought, salinity or extreme temperatures), in comparison to natural processes that would occur in the absence of stimulation.

By "cultivating", it is intended to mean any process of promoting growth and development of a plant. Growing a plant generally involves cultivating the plant in a medium or substrate suitable for growth and development. Typical methods of growing a plant include, but are not limited to, cultivation in pots or containers, cultivation in the ground, hydroponics, aquaponics, soilless cultivation on an artificial substrate, cultivation by vegetative propagation (cuttings).

By "substrate suitable for growth and development", it is intended solid substrate, such as moist filter papers, soils, sands, decaying organic matters, substrates for growing microgreens (vermiculite, coconut peat, mineral wool, soil mixture, mats, etc.) or substrates for growing microgreens *in vitro* on which a plant anchor themselves to grow, live and/or from which they derive nutrients.

By "medium suitable for growth and development", it is intended liquid medium, such as water, water enriched in essential nutrients (nitrogen, phosphorus, potassium, iron, zinc and magnesium) that does not allow plant anchoring, but contributes to the nutritional supply of a plant.

In a first embodiment of the process, step a) is performed on leaves.

Preferably, step a) of the process is performed by treating the plant by spraying the leaves, even more preferably until complete wetting of the leaf.

Preferably, the AEDG peptide, or a salt thereof, is applied to the leaves using a sprayer, atomizer, drip irrigation system or any other device capable of enabling leaves treatment using a liquid product.

Preferably, step a) is performed when the AEDG peptide, or a salt thereof, is formulated as an aqueous solution at a concentration comprised between 10⁻¹⁵ to 10⁻¹ g/L, more preferably, between 10⁻¹² to 10⁻⁵ g/L, even more preferably, between 10⁻¹⁰ to 10⁻⁶ g/L, such as 10⁻⁸ g/L.

Preferably, step a) is performed on a plant of the family Lamiaceae, more preferably, on a plant of the genus *Ocimum, Dracocephalum* or *Satureja.*

Preferably, step a) is performed on a plant of the species *Dracocephalum moldavica* or *Satureja hortensis.*

Advantageously, the AEDG peptide, or a salt thereof, increases the yield and improve the nutrient content of a plant.

In a second embodiment, step a) is performed on the soil.

Advantageously, any of the following methods can be used for a treating step performed on the soil: spreading, spraying, watering, fertilizing irrigation, soil injection or any other soil applications.

Advantageously, the AEDG peptide, or a salt thereof, is applied to the soil using a spreader or any other device capable of enabling soil treatment using a solid product (e.g. granules, microgranules, wettable powders, dry powders, tablets or briquettes, etc.).

Preferably, the AEDG peptide, or a salt thereof, is applied to the soil using a sprayer, atomizer, drip irrigation system or any other device capable of enabling soil treatment using a liquid product.

Preferably, the AEDG peptide, or a salt thereof, is applied directly at the base of a plant to be treated.

Preferably, step a) can be performed with AEDG peptide, or a salt thereof, formulated as an aqueous solution at a concentration comprised between 10⁻¹⁰ to 10⁻¹ g/L, more preferably, between 10⁻⁸ to 10⁻¹ g/L, even more preferably, between 10⁻⁵ to 10⁻² g/L.

Preferably, step a) is performed on a plant of the family *Lamiaceae,* even more preferably, on a plant of the genus *Ocimum, Dracocephalum* or *Satureja.*

Preferably, step a) is performed on a plant of the specie *Ocimum tenuiflorum.*

Advantageously, the AEDG peptide, or a salt thereof, increases the growth, in particular increases the length of the main shoot, the number of nodes and decreases the ratio buds/flowers (*i.e.* flowering) of the plant, such as plant from the order *Lamiales.*

In a third embodiment, step a) is performed on the seed.

Preferably, step a) is performed by soaking the seed in an aqueous solution comprising the AEDG peptide, or a salt thereof.

By "soaking the seed", it is intended to mean the complete submersion of the seeds in a liquid formulation of AEDG, or a salt thereof, so that the liquid on all sides surrounds it.

Advantageously, the seeds are placed in a container and filled with an aqueous solution comprising the AEDG peptide, or a salt thereof.

Preferably, the seed are incubated for 15 min to 8 hours, more preferably, for to 30 min to 5 hours.

Preferably, step a) can be performed with AEDG peptide, or a salt thereof, formulated as an aqueous solution at a concentration comprised between 10⁻⁸ to 10⁻¹ g/L, more preferably, between 10⁻⁶ to 10⁻² g/L, even more preferably, between 10⁻⁴ to 10⁻² g/L, such as 10⁻³ g/L.

Preferably, step a) is performed on the seed of a plant of the family *Lamiaceae,* more preferably, on a plant of the genus *Ocimum, Dracocephalum* or *Satureja.*

Preferably, step a) is performed on a plant of the specie *Ocimum tenuiflorum.*

Advantageously, the AEDG peptide, or a salt thereof, improves the growth, in particular increases the length of the root of a plant.

The step a) of the process for stimulation can advantageously be performed by combining the third embodiment with the first and/or the second embodiment(s). More particularly, step a) can be carried out by soaking the seeds as described above, and, during step b), a further treating step is performed on the leaves and/or on the soil as described above.

Other features and advantages of the invention will become clear from the following examples, given by way of illustration.

### Example 1: Effect of AEDG peptide on Moldavian dragonhead and Summer Savory

### 1. Material and methods

### 1.1 Yield determination

Sowing was carried out with 60 cm row spacing and a seeding rate of 4 kg/ha for summer savory and 6 kg/ha for Moldavian dragonhead. No fertilization or irrigation was planned. The soil on the plot was medium loamy and corresponded to the following characteristics: pH 6.7, hygroscopic moisture -1.1 mg/eq, P₂O₅ - 45 mg/100 g of soil K₂O 35 mg/100 g of soil.

Units of analysis. The Moldavian dragonhead of Sultan variety and the summer savory of Picanta variety (Czech Republic) were chosen as the studied crops.

Treatments application. Treatments with peptide solutions were carried out at the 3-4 pairs of the true leaves. Spraying was carried out with a hand sprayer until complete wetting of the leaf surface in cloudy, windless weather. Control plants were treated with distilled water. A second treatment, performed in the same conditions as the first one, was carried out a month after the first treatment. The studied peptides for treatment were provided in solution with a concentration of 100 µg/mL. For plant treatment, a dilution of 1:10000 was used (10⁻⁴ mL of said solution in 1 L of distilled water), which corresponds to a mass concentration of 10⁻⁸ g/L in the peptide solution.

According to Tsitsilin et al. (2022), the yield of raw materials and seeds is the average yield of raw materials, fruits and seeds per unit area (Tsitsilin A.N. et al., 2022). To determine the yield, the herbs of Moldavian dragonhead and summer savory shall be cut about 1,5 month after the second treatment at a height of 5-12 cm from the soil, at the foliage line, then weighed. The length of plot was equal to 1 m, the width was constant, the cutting is carried out in 4 repetitions. After that, the yield per 1 m² is calculated, *i.e.* 4 square meters were randomly selected, all plants were cut from each of them and weighed. The mass of the plants was summed up and divided by 4, the yield was obtained. Dry raw materials were used for the analysis (Tsitsilin A.N. et al., 2022).

### 1.2 Polyphenol content

Preparation of water-alcohol extracts for quantitative analysis of polyphenols. A portion of dry crushed raw materials (as obtained from 1.1) weighing 0.5 g was measured on precise laboratory scales with an accuracy of ten-thousandth of a gram. This portion of the sample was placed in a 250 mL flask, 40 mL of 50% alcohol solution was added and then it was placed on a water bath with a reflux condenser. After the alcohol solution boils, boiling is going on for 40 minutes, then the solution was cooled up to room temperature and the resulting solution was filtered. Then the content was placed into a 50 mL measuring flask and the extract was brought to the mark with a 50% alcohol solution. The resulting extract was stored in the refrigerator.

Determination of the content of the sum of polyphenols. To analyze the content of the sum of polyphenols in dry plant extracts, a modified Folin-Ciocalteu method was used (Tutelyan, 2010). 1 mL of the resulting extract was added to test tube No. 1 and the volume was brought to 10 mL by adding 9 ml of distilled water. Then 1 mL of the obtained solution from tube No.1 was placed into tube No. 2 together with 1 mL of Folin-Ciocalteu reagent (dilution 1:10) and incubated for 8 minutes. 1 mL of distilled water was mixed with 1 mL of Folin-Ciocalteu reagent in tube No.3 as the control sample. Then 8 mL of 7.5% sodium carbonate (Na2CO3) was added to tubes No. 2 and No. 3 and incubated for 20-30 minutes.

To conduct the analysis, the spectrophotometer was set to a range of 700 to 800 nm and a wavelength of 765 nm. The cuvettes were filled with solutions from tubes No. 2 and No. 3, and the measurement results were recorded.

The sum of polyphenols was calculated using the following formulas:
- Calculation of concentration from the calibration graph of gallic acid: $X = \left(\left(D-0.114\right)\right) / 0.0062$ where:
   X - Concentration calculated from the calibration graph, µg/mL;
   D - Optical density index of the tested sample, ABS.
   0,114 and 0,0062 - Data from equation D=0.0062*X+0.114 of the calibration graph.
- Calculation of the content of the sum of polyphenols expressed as gallic acid: $C = \left(X\times 10\times 50\times 100\right) / \left(M\times 1000000\right)$ where:
   C - Polyphenol concentration, %;
   X - Concentration calculated from the calibration graph, µg/mL;
   M - Sample mass for extract, g;
   10 - Volume of the sample dilution, mL;
   50 - Volume of raw materials dilution for the sample, mL;
   100 - Coefficient for conversion to percentage content;
   1000000 - Coefficient for converting indicators from g to µg.

### 2. Effect of AEDG peptide on the growth of Moldavian dragonhead and Summer savory

The effects of AEDG peptide are presented in Table 1 below

**Table 1: Effect of AEDG peptide on yield and polyphenol on Moldavian dragonhead and Summer savory**

| | **Polyphenols, %** | **Yield, g/m²** |
|---|---|---|
| Control Moldavian dragonhead | 8.63 ± 0.15 | 1250 ± 49 |
| Moldavian dragonhead treated with AEDG peptide | 8.96 ± 0.18* | 1290 ± 43 |
| Control Summer savory | 6.29 ± 0.14 | 690 ± 17 |
| Summer savory treated with AEDG peptide | 6.86 ± 0.16* | 750 ± 32* |

| | | |
|---|---|---|
| * Presence of statistically significant differences compared to the control at p<0.05 (confidence intervals do not intersect). Data are presented as average and 95% confidence interval. | | |

The results from Table 1 show that the content of polyphenols, in Moldavian dragonhead and Summer savory, has significantly increased after a treatment with the AEDG peptide. Indeed, the content of polyphenols in Moldavian dragonhead and Summer savory increased by 4% and by 9%, respectively, in the plant compared to the control.

The results from Table 1 also show that the yield of Moldavian dragonhead and Summer savory has increased after a treatment with the AEDG peptide. Moreover, the yield of Summer savory has significantly increased, by 9% compared to the control.

In conclusion, the AEDG peptide increased the yield and the content of polyphenols of the Moldavian dragonhead and Summer savory.

### Example 2: Effect of AEDG peptide on Holy Basil

### 1.1 Length of the main root of Holy Basil

The seeds of holy basil were placed in 1.5 mL Eppendorf tubes and filled with peptide solution (obtained as sterile solution in ampoules) at a concentration of 1.0 mg/L and incubated for 30 minutes. The choice of peptide concentration and treatment exposure was based on the following considerations and facts:
- concentration of 1.0 mg/L, was obtained by 3 stepwise tenfold dilution of the initial concentration of 100mg/L.
- exposure of 30 minutes approximately corresponds to the time of formation of the mucous capsule by basil seeds: the capsule was fully formed from the peptide aqueous solution; the peptides get the possibility to affect further seeds germination after the seeds were removed from the solution.

The seeds were placed in 14 cm diameter plastic Petri dishes after treatment on moistened filter paper discs. The control group of seeds was kept in purified water of type III for 30 minutes. 5 Petri dishes with 10 seeds each were used for each group. For further determination of the main root length), 15 germinates were selected from each group.

Cultivation conditions. Petri dishes with seeds were placed in a light room, during 14 days, with adjustable parameters: temperature of 21±2°C, photoperiod of 16h light and 8h darkness, light source - white LED lamps, 3500 K, light flux density: 110 µmol*m²/s, illumination: 6000 lux.

The results show that the treatment with AEDG peptide increased significantly the length of the main root of the Holy basil compared to the untreated Holy basil (control). Indeed, the Holy basil treated with AEDG peptide have a main root of 3.9* cm and the untreated Holy basil (control) have a main root of 3.25 cm. Thus, the length of the main root of the Holy basil treated with AEDG peptide increases by 20% compared to the untreated Holy basil (control).

### 1.2 Length of main shoot of Holy basil

Cultivation of holy basil microgreens on breeding grounds was made, said breeding grounds being supplemented with peptides in concentrations of 5 mg/L.

The results show that the treatment with AEDG peptide increased significantly the length of the main shoot of Holy basil compared to the untreated Holy basil (control). Indeed, the Holy basil treated with AEDG peptide have a main shoot of 76* mm and the untreated Holy basil (control) have a main shoot of 28 mm. Thus, the length of the main shoot of the Holy basil treated with AEDG peptide increases by 170% compared to the untreated Holy basil (control).

### 1.3 Number of nodes

Sprigs of *O*. *tenuiflorum* (Holy basil) 1 node (1.0-1.5 mm) aseptic plants were used for the experiment. The sprigs were cultivated on Murashige and Skoog breeding ground without phytohormones and growth regulators with addition of peptides in concentration of 5 mg/L. The peptides were added to the breeding ground after autoclaving in a laminar box from a sterile ampoule.

Cultivation was carried out for 6 weeks in polypropylene containers with 3 sprigs in one container. 5 containers were used for each group (5 for the peptide concentration and 5 for the control without peptide). From 8 to 14 microplants were selected for determination of morphophysiological parameters.

Cultivation under *in vitro* conditions was carried out according to the standard methods (Kalashnikova et al., 2023).

Cultivation conditions. Containers with aseptic plants were placed in a light room with adjustable parameters: temperature of 21±2°C, photoperiod of 16h light and 8h darkness, light source - white LED lamps, 3500 K, light flux density: 110 µmol*m2/s, illumination: 6000 lux.

The results show that the treatment with AEDG peptide increased the number of nodes of Holy basil compared to the untreated Holy basil (control). Indeed, the Holy basil treated with AEDG peptide have 6.8 pieces of nodes and the untreated Holy basil (control) have 4.8 pieces of nodes. Thus, the number of nodes of the Holy basil treated with AEDG peptide increased by 40% compared to the untreated Holy basil (control).

### 1.4 Number of buds and flowers

Sprigs of *O*. *tenuiflorum* (Holy basil) 1 node (1.0-1.5 mm) aseptic plants were used for the experiment. The sprigs were cultivated on Murashige and Skoog breeding ground without phytohormones and growth regulators with addition of peptides in concentration of 0.1 mg/L . The peptides were added to the breeding ground after autoclaving in a laminar box from a sterile ampoule.

Cultivation was carried out for 6 weeks in polypropylene containers with 3 sprigs in one container. 5 containers were used for each group (5 for the peptide concentration and 5 for the control without peptide). From 8 to 14 microplants were selected for determination of morphophysiological parameters.

Cultivation under *in vitro* conditions was carried out according to the standard methods (Kalashnikova et al., 2023).

Cultivation conditions. Containers with aseptic plants were placed in a light room with adjustable parameters: temperature of 21±2°C, photoperiod of 16h light and 8h darkness, light source - white LED lamps, 3500 K, light flux density: 110 µmol*m²/s, illumination: 6000 lux.

The results show that the treatment with AEDG peptide increased the number of buds and flowers of Holy basil compared to the untreated Holy basil (control). Indeed, the Holy basil treated with AEDG peptide have developed 13/4 buds/flowers and the untreated Holy basil (control) have 13/0 buds/flowers.

In conclusion, the AEDG peptide leads to the formation of a longer main root in germinate compared to the control and promote growth of the aerial part of Holy Basil.

To be noted that the "*" indicates the presence of statistically significant differences compared to the control at p<0.05 (confidence intervals do not intersect). Data are presented as average and 95% confidence interval.

## Claims

1. Use of a peptide consisting of the amino acid sequence of AEDG (SEQ ID NO: 1), or a salt thereof, as a biostimulant for treating a plant of the order Lamiales.

2. Use of a peptide according to claim 1, wherein the plant of the order *Lamiales* is selected from the genus *Ocimum, Dracocephalum* or *Satureja.*

3. Use of a peptide according to claim 1 or 2, wherein the biostimulant is a yield stimulant and/or a root stimulant.

4. Use of a peptide according to any one of claims 1 to 3, wherein the biostimulant is used to improve the nutrient content and/or the shoot system of the plant.

5. Use of a peptide according to any one of claims 1 to 4, wherein the peptide is in solid form.

6. Use of a peptide according to any one of claims 1 to 5, wherein the peptide is formulated as a liquid composition.

7. Use of a peptide according to any one of claims 1 to 6, wherein the biostimulant is used for treating seed.

8. A process for stimulating a plant of the order Lamiales, comprising the following steps:
a) Treating said plant with AEDG peptide, or a salt thereof,
b) Cultivating said plant.

9. The process according to claim 8, wherein step a) is performed on leaves.

10. The process according to claim 8, wherein step a) is performed on the soil.

11. The process according to claim 8, wherein step a) is performed on the seed.

12. The process according to claim 11, wherein step a) is performed by soaking the seed in an aqueous solution comprising the AEDG peptide, or a salt thereof.
